# EUROPEAN PATENT APPLICATION

(11) **EP 0 769 461 A1**
(43) Date of publication of application: **23.04.1997**
(21) Application number: 96117247.5
(22) Date of filing: 28.10.1996
(51) Int. Cl.: B65G 59/02, B65G 61/00

(54) **Magazine for storage and removal of packs of packaging sheets, especially in cigarettes packaging machines or the like**

(30) Priority: 08.11.1995 IT GE950119
(71) Applicant: SASIB S.p.A., I-40128 Bologna (IT)
(72) Inventor: Spada, Valter, 40043 Marzabotto (IT); Martoccia, Nicola, 40100 Bologna (IT)
(74) Representative: Karaghiosoff, Giorgio Alessandro, Dipl.-Phys.

(57) **Abstract**

Magazine for the storage and removal of packs of packaging sheets, especially for cigarette packaging machines or the like, in which the stacks (2) of packaging sheets are fed into the magazine (1) in stacks comprising a plurality of layers (105) one above the other, which layers (105) are each made up of one or more packs (2) arranged side by side, while the magazine (1) is provided with a storage space for storing said stack (5) of packs (2) of packaging sheets and with means (7, 8, 9, 10, 11, 12, 13, 14, 15, 16, 17, 18, M) for removing packs (2) of packaging from the stack (5) and feeding them to a subsequent processing station or processing machine (3). According to the invention, the magazine (1) is formed by a bridge-type loadbearing structure which on one side adjoins the processing machine (3) or a line for feeding the packs (2) to said subsequent processing machine (3), whereas it is free on at least two of the remaining three sides, which each have an entrance opening for the stack (5) of packs (2) of packaging sheets.

## Description

The invention relates to a magazine for the storage and removal of packs of packaging sheets, especially for cigarette packaging machines or the like, in which the stacks of packaging sheets are fed into the magazine in stacks comprising a plurality of layers one above the other, which layers are each made up of one or more packs arranged side by side, while the magazine is provided with a storage space for storing said stack of packs of packaging sheets and with means for removing packs of packaging from the stack and feeding them to a subsequent processing station.

In cigarette packaging machines or the like, in particular, which run at high speeds, a very great number of packaging sheets is required. These are fed to the machine in packs containing a predetermined number of packaging sheets. The individual packs of packaging sheets are grouped together on quadrilateral pallets of dimensions such that the individual packs are arranged in stacks comprising a plurality of layers, each layer consisting of a number of horizontal rows of packs arranged side by side, while the packs of each layer are lined up vertically with the packs of the adjacent layers. The packs are generally removed one by one in a predetermined order commencing with the top layer of the stack and are fed in succession to the processing machine situated downstream, which in this case is a cigarette packaging machine. The high rate of consumption of packaging sheets due to the high processing speed of the packaging machines requires that, in order to avoid frequently interrupting the work cycles, the stacks be made up of a large number of packs of packaging sheets. Compatibly with the standard dimension of pallets, therefore, the stacks of packaging packs are of rectangular parallelepipedal shape and are very large and heavy. This makes the operations of loading these stacks of packs of packaging sheets difficult and somewhat complicated, and transporting means such as fork-lift trucks or the like have to be used. In these circumstances it is of the greatest importance that the magazine be constructed so as to allow good access and to facilitate the operations of loading the pallets of packs of packaging sheets.

The object of the invention is to provide a magazine of the type described in the introduction in such a way as to make simpler, faster and more efficient both the feeding of the stacks of packs of packaging sheets into the magazine, and the access to these magazines.

The invention achieves the above objects in the form of a magazine of the type described in the introduction which is formed by a bridge-type loadbearing structure which on one side adjoins the processing machine or a line for feeding the packs to said subsequent processing machine, whereas it is free on at least two of the remaining three sides, which each have an entrance opening for the group of packs of packaging sheets.

Advantageously, if at least one of the three sides of the bridge-type magazine not occupied by the processing machine or by the means that convey the packs to the machine is designed for the installing of additional processing units connected to the magazine, it is possible for the openings on all three said sides to be identical in shape to each other, while said processing unit or units are made in the form of modular elements with a partial or complete wall and can be fixed removably in the opening of any open side of the magazine.

Depending on the presence or absence of and on the dimensions of the additional processing units and on the depth of the processing machine, the magazine may be fully accessible on at least two or on all three sides and at least partly accessible for the operator on the side leading to the processing machine, or fully accessible on two sides only and partly accessible from the side leading to the processing machine and to the additional processing units which can be connected to the magazine, the processing machine being so arranged that its rear side is lined up with the corresponding rear side of the magazine, so as to leave a way in at least sufficient for the operator to pass through.

The means for removing the individual packs of packaging sheets are slung above it from handling means connected to the bridge-type structure.

In particular said handling means are formed by combinations of at least three rails and three associated sliding blocks that travel on the latter, each of which rails is oriented in one of the three mutually orthogonal directions, two of which directions lie in the horizontal plane with one parallel with the direction in which the packs are fed to the processing machine, and one of which is vertical, each of which sliding blocks carries one of the additional rails or the removal means.

If the packs of packaging sheets are of rectangular parallelepipedal shape and the stack formed by these is also of rectangular parallelepipedal shape, it is advantageous for the three axes on which the three sliding blocks travel along the associated rails to be oriented parallel with the edges in the three dimensions of the stacks of packs of packaging sheets, for which purpose it is possible also to provide stack-orienting means such as, for example, supporting tables that can be rotated, or the like.

In a preferred embodiment the vertical handling means consist of two brackets projecting cantilever-fashion towards the middle of the magazine and of the stack of packs of packaging sheets, parallel with each other and with the direction in which the packs of packaging sheets are fed to the processing machine, i.e. with two opposite faces of the bridge-type structure, which brackets are mounted on sliding blocks that travel along rails fixed to two vertical posts forming part of the bridge-type structure, while the two brackets support at their ends a first horizontal beam oriented transversely to the direction in which the packs of packaging sheets are fed to the processing machine, from which first beam is slung, on a sliding block that travels along said first beam, a second horizontal beam perpendicular to the first, that is, oriented in the direction in which the packs of packaging sheets are fed to the processing machine, and which carries on a sliding block that travels along this beam the removal members for removing the pack or packs of packaging sheets.

In its preferred embodiment, the bridge-type loadbearing structure of the magazine is basically of a parallelepipedal shape similar to the shape of the stack Of packs of packaging sheets, and consists of vertical posts standing at the vertical edges, which are joined by peripheral upper cross-members.

In particular, the bridge-type loadbearing structure has on at least one side, and preferably on all of the sides, additional vertical posts and additional upper cross-members joined together and situated a certain distance away from those on the edges, towards the middle of the corresponding side of the bridge-type structure, which run along the upper and lateral defining margins of the magazine's entrance opening or openings, that is they enclose it in the manner of a frame, while the entrance openings are obviously of slightly greater dimensions than those of the stacks of packs of packaging sheets.

In a further improvement, the means for removing individual packs are slung from and are able to travel along an upper horizontal rail which is oriented in the direction in which the packs of packaging sheets are fed to the processing machine, that is parallel with a pair of beams at the top of the loadbearing structure.

The movements of the removal means, which consist of a projecting blade that is inserted between two packs; the movements of the first rail on the second rail orthogonal thereto; and the raising and lowering of the two brackets supporting said second rail can be controlled by actuators of any kind, using any kind of drive system, e.g. mechanical, pneumatic hydraulic, or the like.

Because of the construction described above, the magazine according to the invention occupies very little space, allows easy access both to the storage space containing the stacks of packs of packaging sheets and to the individual working parts for the purposes of maintenance. These parts are relatively simple and therefore mechanically reliable and accurate in operation.

The shape of the bridge-type structure corresponding to that of the stacks of packs of packaging sheets is normally therefore essentially that of a rectangular parallelepiped and is slightly larger than the stacks of packs of packaging sheets. Moreover the bridge-type structure makes it possible to provide a feed opening on more than one side, so making the machine more efficient in its arrangement and more adaptable to local characteristics and conditions.

The construction described above makes it possible to provide in combination with the magazine an automatic unit for replacing empty stacks or pallets with full stacks or pallets.

In a preferred embodiment, the automatic replacing unit is made up of a feeding and unloading track which passes through the processing position of the stack in the magazine for the removal of the packs and which extends out of the magazine at each of at least two of its free entrance openings to provide a full-pallet loading end and an empty-pallet unloading end.

The feeding and unloading track consists of one or a pair of rails and a pair of sliding blocks or carriages for supporting the pallets, which sliding blocks or carriages can be moved in alternation with each other on the external loading/unloading end at the corresponding entrance opening of the magazine and into the processing position in which the packs are removed from the stack, alternating with each other as they carry the empty pallet to be unloaded and the full pallet to be fed into the magazine.

If the two entrance openings of the magazine are arranged opposite each other, the feeding and unloading track is straight and extends from an external loading/unloading end at one of the two entrance openings to an opposing external loading/unloading end at the other entrance opening opposite it.

If, however, the two entrance openings of the magazine are arranged at 90° to each other, then the feeding and unloading track also has two arms at an angle of 90° to each other.

In the latter case, the carriages, sliding blocks or the like are square in shape.

The entrance openings of the magazine advantageously have automatic doors for closing and opening these openings under the control of sensors.

The invention also includes other features which further improve the magazine described above and these are the subject of the dependent claims.

The particular features of the invention and the advantages procured thereby will be seen in greater detail in the description of a preferred embodiment, illustrated by way of a non-limiting example in the accompanying drawings, in which:

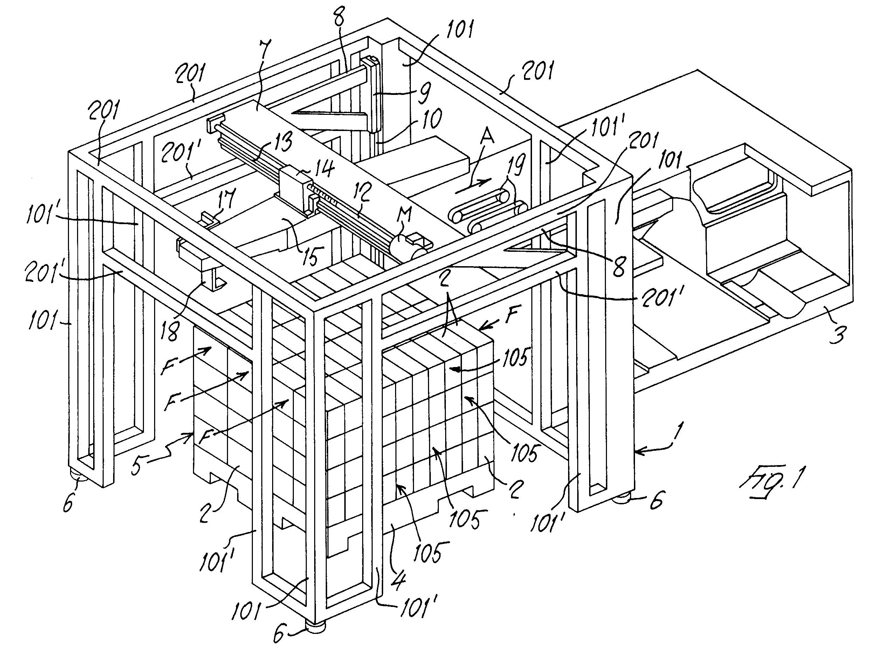

Fig. 1 shows a perspective view of a magazine according to the invention, in combination with a processing machine.

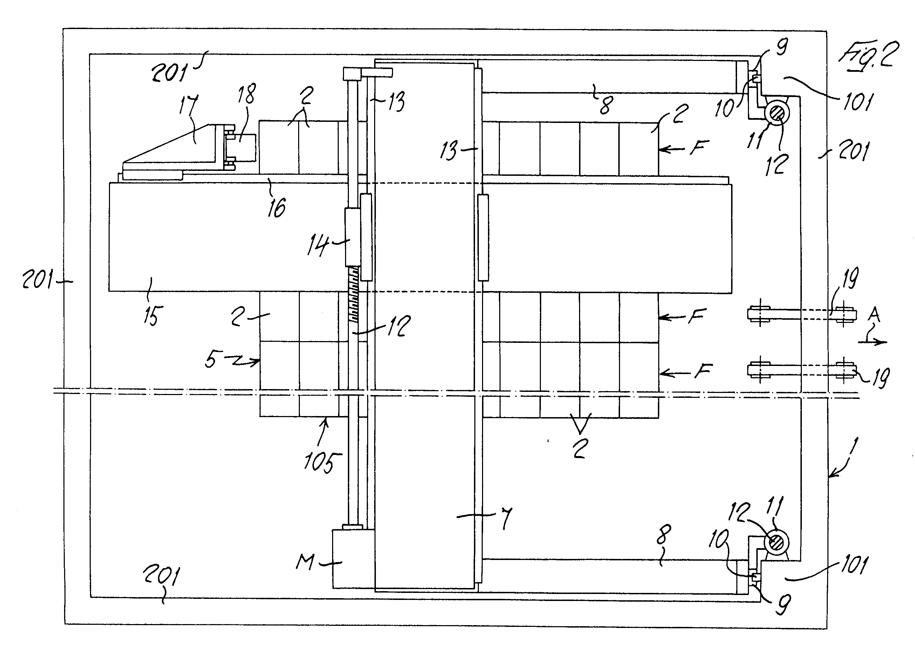

Fig. 2 shows a plan view from above of the magazine illustrated in Fig. 1.
Fig. 3 shows a side elevation of the magazine depicted in the previous figures.
Figs. 4 and 5 show plan views of the magazine connected to a unit which replaces empty pallets with full pallets, Fig. 4 illustrating a straight-track version and Fig. 5 a version in which the track includes a 90° turn.
Fig. 6 shows a schematic side view of the magazine with the automatic doors for closing and opening its open sides.

With reference to the figures, a magazine 1 for storing packs 2 of packaging sheets and feeding them to a subsequent processing machine 3, for example a cigarette packaging machine, only the basic frame of which is illustrated, comprises a bridge-type loadbearing structure defining internally a storage space for a plurality of packs 2 of packaging sheets.

The packs 2 of packaging sheets are grouped together in a stack 5, on a pallet 4. The stack 5 is composed of a plurality of layers 105 one above the other, each of which layers 105 is made up of a plurality of packs 2 arranged in a plurality of parallel rows F, the packs in each row F all being in contact with each other, as are the individual rows. Every pack 2 in one layer is in a vertically coinciding position with the pack 2 in the layer 105 below and/or above. The individual layers of packs (2) are separated from each other generally by separating sheets (not illustrated in detail).

Because the packs 2 are generally of rectangular parallelepipedal shape, the stack 5 of packs 2 is similar in shape, that is to say is effectively a rectangular parallelepiped and is formed from vertical posts and upper cross-members 101, 201 that extend along the lateral and upper edges of the bridge-type structure 1. Advantageously, moreover, the parallelepipedal-shaped bridge-type structure is oriented with two opposite lateral faces parallel with the direction (arrow A) in which the packs 2 are fed to the processing machine 3. The bridge-type structure 1 has openings in all four lateral faces. On preferably all, but on at least two, and especially on three, faces, these are of such dimensions as to allow the stack 5 of packs 2 of packaging sheets to be passed into the magazine. Advantageously, the openings extend down to the ground and are taller than the stacks 5, in order to allow them to be fed in while raised off the ground with the aid of conveyor means such as fork-lift trucks or the like.

Connected up to the opening of one of the four faces of the bridge-type structure 1 is the processing machine 3 or alternatively the conveying line for carrying the packs 2 to this machine.

Advantageously, at least two of the additional openings on the corresponding free faces of the bridge-type structure 1 remain free for the stack 5 of packs 2 to pass through.

However, the opening on the remaining third face can when necessary be closed partly or completely by optional additional processing units.

To this end, in order to ensure that the magazine is as flexible as possible both to install and to use, the openings on the three free faces, and preferably on all four faces, are identical to each other in shape and dimensions, and the additional processing units are made in the form of modules that can easily be fixed to any face of the bridge-type structure, for example by way of a wall for partly or completely closing off the corresponding opening, and fixing means are provided in predetermined standard positions.

The bridge-type structure, which is slightly larger than the stack 5 of packs 2, may advantageously comprise additional posts and upper cross-members 101', 201' for reinforcing purposes: these are positioned in such a way as to enclose the openings in the manner of a frame, that is to say by defining their lateral and upper peripheral edges. The vertical posts 101 stand on the ground supported by feet 6, which are preferably adjustable for height.

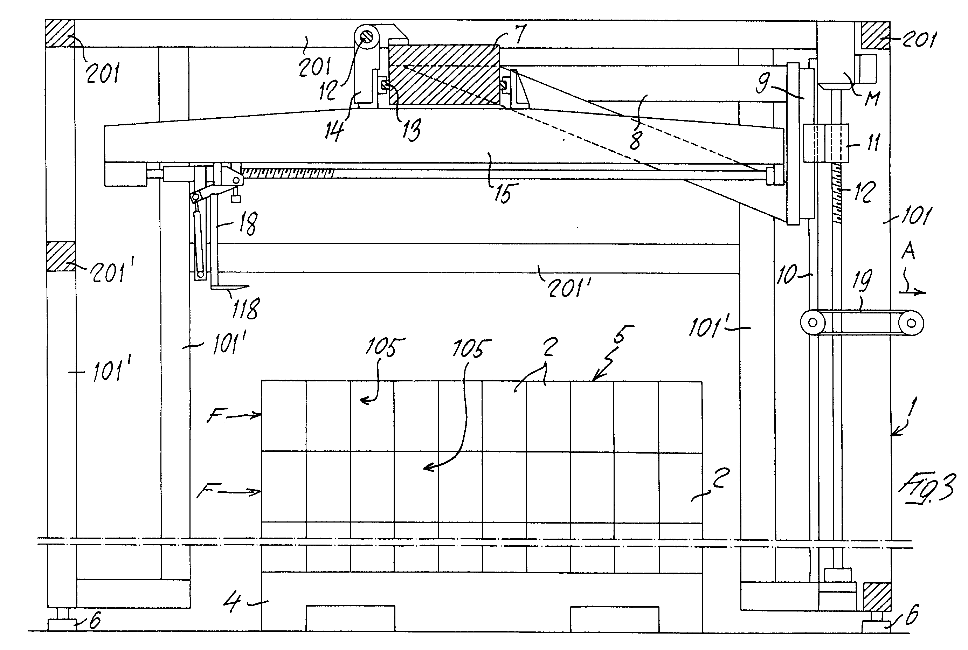

In the middle of the magazine, along the vertical plane running transversely to the direction in which the packs 2 are fed to the processing machine 3, is a horizontal supporting beam 7 which is supported with vertical mobility by two brackets 8, one at each end. These two brackets extend parallel with the interior sides of the two faces of the bridge-type structure that lie in the direction A in which the packs 2 are fed to the processing machine 3 and are each supported cantilever-fashion on a sliding block 9 that travels vertically up and down a vertical rail 10 fixed to the corresponding vertical corner post 101. Any method of moving the sliding block may be used, such as an electric motor M and a screw and nut drive as illustrated and denoted 12, 11 in Fig. 3.

The upper cross-member 7 perpendicular to the direction A in which the packs 2 are fed to the processing machine 3 carries a parallel horizontal transverse rail 13 on which is mounted a sliding block 14. Slung underneath the sliding block 14 is another second horizontal beam 15 lying parallel with the direction A in which the packs 2 are fed to the processing machine 3: it in turn has a parallel rail 16 on which travels a sliding block 17, underneath which are slung, in the direction of the stack 5 of packs 2 of packaging sheets, the removal means 18. The movements of the second beam 15 transversely to the first beam 7 and to the direction A in which the packs 2 are fed to the processing machine 3, and the movements of the removal means along said second beam 15 in said feed direction A, can be activated by any means and in the example illustrated the actuating means are much the same as those described previously in relation to brackets 8, namely electric motors M and screw and nut type drives 12, 11.

By means of this arrangement, the removal means 18 hang down from above over the stack 5 of packs 2 of packaging sheets, leaving a storage space which is totally free for when the stack 5 is being loaded into the magazine.

The removal means 18 may be of any kind and in the example illustrated consist of a suspended removal stirrup with a free front end by way of a horizontal insertion blade 118 designed to be introduced between two vertically aligned packs 2. By means of the means 8, 9, 10, 7, 13, 14, 15, 16, 17, the removal means 18 can be brought up to each pack 2 that forms a layer 105 of the stack 5 in order to remove said pack 2 and can then be brought up to the input of conveyor means 19 which convey the pack 2 to the subsequent entry station of the processing machine 3.

The packs 2 are thus removed and fed in succession to the processing machine 3, while the stack 5 is gradually used up step by step in any preferred order.

The stack 5 of packs 2 of packaging sheets must be comparatively precisely positioned with respect to the feed direction A and hence to the geometry of the magazine 1 and of the handling means of the removal members 18: this is quite simple owing to the similarity of shape between the bridge-type structure and the stack 5 and, of course, to the possibility of providing positioning marks on the floor of the storage space. In some cases, however, it may be useful to provide some means of positioning the stack 5, such as a supporting table that can be moved along the two axes of the horizontal plane and/or vertically and/or can be rotated about its own axis, or other similar means, depending on how critical the positioning is for the particular type of packaging sheet or pack.

With the construction outlined above, and as indicated clearly in the figures, the magazine according to the invention allows access for the stack 5 of packs 2 of packaging sheets through all three, or alternatively through a minimum of two, of the free walls: basically, that is to say, at least in the direction of the corresponding end of the processing machine and from the front side and additionally or alternately from the rear side, or from the two opposing front and rear sides only; this all depends on whether or not one of the three remaining free faces needs to be occupied by auxiliary processing accessories.

It will be evident that the possibility of gaining access easily to the interior of the magazine from at least two of three possible sides, or even from all three sides, to the advantage of the stack 5 conveyor means, as well as the ease with which the stack can be positioned and oriented in its storage space, makes it possible to design a more rational layout of the machines and a more efficient stack feeding surface. Even the construction and arrangement of the processing line becomes easier to adapt to local needs without requiring more work or financial outlay.

If the processing machine is appropriately designed, the magazine will also be partially accessible to service personnel from the side connected to this processing machine.

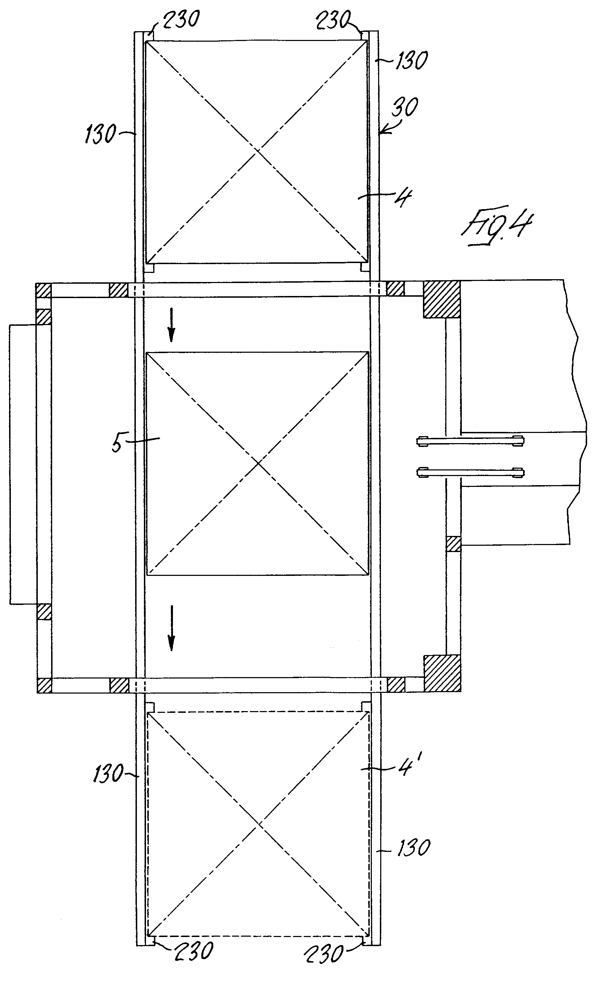

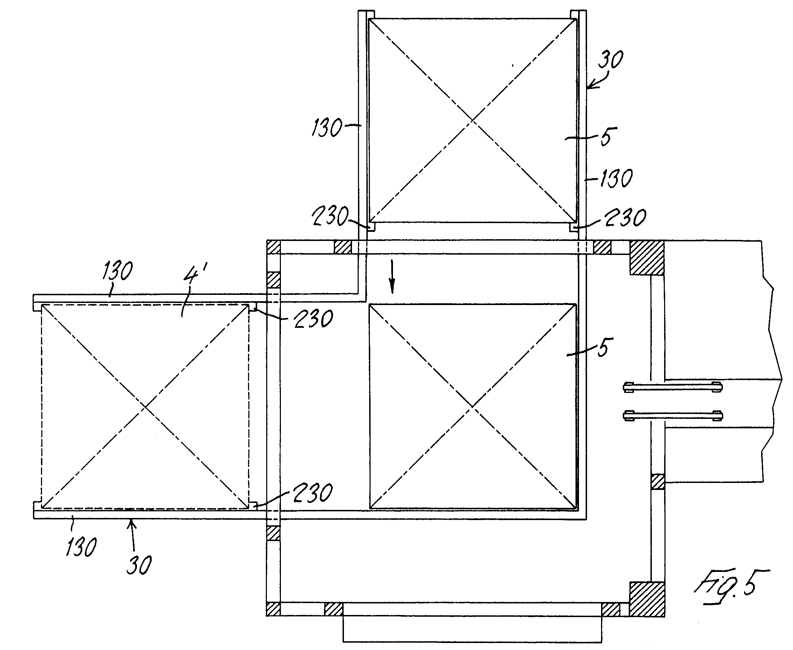

In an improvement illustrated in Figs. 4, 5 and 6, by virtue of the construction described above it is possible to connect up to the magazine an automatic unit for replacing an empty pallet 4' with a full pallet 4. The automatic replacing unit comprises a track 30 on which the pallets move through the stack 5 processing position inside the magazine and which extends from an external loading/unloading end at one of at least two free entrance openings in the magazine 1 to a loading/unloading end on the opposite side which is external to the other of the two entrance openings of the magazine. The feeding and unloading track 30 may take the form of pairs of rails 130 carrying a travelling carriage, sliding block or the like 230. Any type of rails 130 and carriage or sliding block 230 can be adopted. The drive means may take the form of some means of pulling or pushing the sliding block or carriage, or else the carriage or sliding block 230 may be motorized and may mesh with the rails 130 in order to be able to move itself along them with precision.

If the two entrance openings are situated opposite each other (Fig. 4), the track 30 can be straight.

On the other hand, if the two entrance openings are situated at 90° to each other the entrance track will consist of two arms at an angle of 90° to each other and joined together in the region of the processing position of the stack 5.

Operation, and permission for transfers and replacements, are governed by sensors which monitor the processing situation of the magazine 1. When a pallet 4 in the processing position is finished, a full pallet is ready on one of the loading/unloading ends. The full pallet is moved into the processing position while the finished pallet 4' is simultaneously moved to the opposite loading/unloading end of the track 30, from where it is removed and replaced with a full pallet to replace the one now in the processing position inside the magazine 1. The two loading/unloading ends are thus used alternately for feeding full pallets and unloading empty pallets. This also occurs in the case of a right-angled feeding and unloading track 30.

In particular, and advantageously, the track has two carriages or sliding blocks used respectively for supporting the full replacement pallet and the pallet in the processing position, and they move alternately into the processing position and back to the corresponding loading/unloading end of the track 30. In the case of a right-angled track, the sliding blocks or carriages will be basically square.

The operations of unloading the finished pallet 4' and loading the new full pallet from and to the corresponding loading/unloading ends of the track 30 can be carried out very easily owing to the fact that the time taken to consume the packs 2 of packaging sheets of the stack 5 in the processing position inside the magazine 1 is rather long and certainly sufficient for these operations to be carried out.

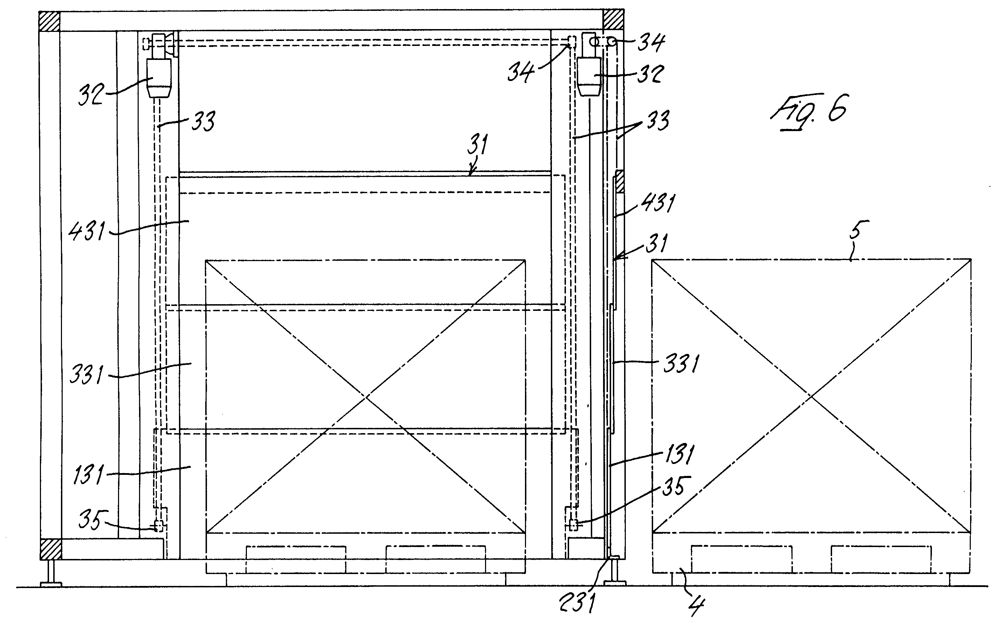

Referring to Fig. 6, the entrance sides of the magazines are provided with automatic doors for closing and opening them. These doors 31 are of the type that retract vertically upwards and are operated by motors 32 with some suitable belt drive 33 for lifting them. The doors 31 consist of a plurality of panels one above the other and sliding over each other in a vertical direction. The bottom panel 131 has a transverse carrying flange 231 along its bottom edge and is connected at its two opposite ends to a lifting belt 33 which is passed around a driven upper pulley 34 and an idle lower pulley 35 and also has a straight portion fixed to an extension on the end of the bottom panel 131. The carrying flange 231 projects outwards far enough to come into contact with the lower edges of the upper panels 331, 431, causing them to be carried along with the bottom panel 131 as it rises.

The invention is not of course limited to the embodiments described above and illustrated but can be considerably altered and modified, especially from the constructional point of view, without departing from the underlying principle set forth above and claimed below.

## Claims

1. Magazine for the storage and removal of packs of packaging sheets, especially for cigarette packaging machines or the like, in which the stacks (2) of packaging sheets are fed into the magazine (1) in stacks comprising a plurality of layers (105) one above the other, which layers (105) are each made up of one or more packs (2) arranged side by side, while the magazine (1) is provided with a storage space for storing said stack (5) of packs (2) of packaging sheets and with means (7, 8, 9, 10, 11, 12, 13, 14, 15, 16, 17, 18, M) for removing packs (2) of packaging from the stack (5) and feeding them to a subsequent processing station or processing machine (3), which magazine (1) is characterized in that it is formed by a bridge-type loadbearing structure which on one side adjoins the processing machine (3) or a line for feeding the packs (2) to said subsequent processing machine (3), whereas it is free on at least two of the remaining three sides, which each have an entrance opening for the stack (5) of packs (2) of packaging sheets.

2. Magazine according to Claim 1, characterized in that the openings extend down to the ground and in that their dimensions are such as to guarantee that the stacks (5) can get through even when raised to a predetermined height off the ground.

3. Magazine according to Claim 1 or 2, characterized in that at least one of the three sides of the bridge-type magazine (1) not occupied by the processing machine (3) or by the means that convey the packs (2) to the machine is designed for the installing of additional processing units connected to the magazine, it being possible for the openings on all three said sides to be identical in shape to each other, while said processing unit or units are made in the form of modular elements with a partial or complete wall and can be fixed removably in the opening of any open side of the magazine.

4. Magazine according to one or more of the previous claims, characterized in that the means (18) for removing the packs (2) of packaging sheets are slung above it from handling means (7, 8, 9, 10, 11, 12, 13, 14, 15, 16, 17, M) connected to the bridge-type structure (1).

5. Magazine according to Claim 4, characterized in that the handling means are formed by combinations of at least three rails (10, 13, 16) and three associated sliding blocks (9, 14, 17) that travel on the latter, each of which rails (10, 13, 16) is oriented in one of the three mutually orthogonal directions, two of which directions lie in the horizontal plane, with one in the direction (A) in which the packs (2) are fed to the processing machine (3), and one of which directions is vertical, and each of which sliding blocks (9, 14, 17) carries the other rail or the removal means (10, 13, 16, 18).

6. Magazine according to Claim 5, characterized in that the vertical handling means consist of two brackets (8) projecting cantilever-fashion towards the middle of the magazine and of the stack (5) of packs (2) of packaging sheets, parallel with each other and with the direction (A) in which the packs (2) are fed to the processing machine (3), which brackets are mounted on sliding blocks (9) that travel along rails (10) fixed to two vertical posts (101) forming part of the bridge-type structure, while the two brackets (8) support at their ends a first horizontal beam (7) oriented transversely to the direction (A) in which the packs (2) of packaging sheets are fed to the processing machine (3) and from which first beam (7) is slung, on a sliding block (14) that travels along said first beam (7), a second horizontal beam (15) perpendicular to the first, that is, oriented in the direction (A) in which the packs (2) of packaging sheets are fed to the processing machine (3), and which carries on a sliding block (17) that travels along this second horizontal beam (15) the removal members (18) for removing the pack or packs (2) of packaging sheets.

7. Machine according to one or more of the previous claims, characterized in that it is designed for use with packs (2) of packaging sheets of rectangular parallelepipedal shape, and the stack (5) formed by these is also of rectangular parallelepipedal shape, the individual packs (2) of packaging sheets being assembled on pallets (3) of quadrilateral shape and of such dimensions that the individual packs (2) are stacked in a plurality of layers (105), each of which layers (105) is composed of a plurality of horizontal rows (F) of packs (2) arranged side by side, while the packs (2) of each layer (105) are vertically in line with the packs (2) of the adjacent layers (5), the three axes on which the three sliding blocks (9, 14, 17) travel along the associated rails (10, 13, 16) being oriented parallel with the edges in the three dimensions of the stacks (5) of packs (2) of packaging sheets.

8. Magazine according to one or more of the previous claims, characterized in that it comprises stack (5) orienting means such as, for example, supporting tables that can be rotated and/or moved translationally and/or raised and lowered, or the like.

9. Magazine according to one or more of the previous claims, characterized in that the bridge-type loadbearing structure of the magazine (1) is basically of a parallelepiped shape similar to the shape of the stack (5) of packs (2) of packaging sheets, and consists of vertical posts (101) standing at the vertical edges, which are joined by peripheral upper cross-members (201).

10. Magazine according to Claim 9, characterized in that the bridge-type loadbearing structure (1) has on at least one side, and preferably on all of the sides, additional vertical posts (101') and additional upper cross-members (201') that are situated a certain distance away from those (101, 201) on the edges, towards the middle of the corresponding side of the bridge-type structure, which run along the upper and lateral defining margins of the magazine's entrance opening or openings, that is they enclose it in the manner of a frame.

11. Magazine according to Claim 1 or one or more of the previous Claims 2 to 10, characterized in that it comprises in combination an automatic unit (30) for replacing empty stacks or pallets with full stacks or pallets.

12. Magazine according to Claim 11, characterized in that the automatic replacing unit is made up of a feeding and unloading track (30) which passes through the processing position of the stack (5) in the magazine (1) for the removal of the packs (2) and which extends out of the magazine (1) at each of at least two of its free entrance openings to provide a full-pallet loading end and an empty-pallet unloading end.

13. Magazine according to Claim 12, characterized in that the feeding and unloading track (30) consists of one, two or more rails (130) and one, two or more sliding blocks or carriages (230) for supporting the pallets, which sliding blocks or carriages (230) can be moved in alternation with each other on the external loading/unloading end at the corresponding entrance opening of the magazine (1) and into the processing position in which the packs (2) are removed from the stack (5), alternating with each other as they carry the empty pallet to be unloaded (4') and the full pallet to be fed into the magazine (1).

14. Magazine according to Claim 13, characterized in that if the two entrance openings of the magazine (1) are arranged opposite each other, the feeding and unloading track (30) is straight and extends from an external loading/unloading end at one of the two entrance openings to an opposing external loading/unloading end at the other entrance opening opposite it.

15. Magazine according to Claim 13, characterized in that if the two entrance openings of the magazine (1) are arranged at 90° to each other, then the feeding and unloading track (30) also has two arms at an angle of 90° to each other.

16. Magazine according to Claim 15, characterized in that the carriages, sliding blocks or the like (230) are square in shape.

17. Magazine according to one or more of the previous claims, characterized in that the entrance openings of the magazine (1) have automatic doors (31) for closing and opening these openings under the control of sensors.

18. Magazine according to Claim 1 or one or more of the previous Claims 2 to 17, characterized in that depending on the presence or absence and on the dimensions of the additional processing units and on the depth of the processing machine (3), the magazine (1) may be fully accessible on at least two or on all three sides and at least partly accessible for the operator on the side leading to the processing machine (3), or fully accessible on two sides only and partly accessible from the side leading to the processing machine (3) and to the additional processing units which can be connected to the magazine, the processing machine being so arranged that its rear side is lined up with the corresponding rear side of the magazine (1), so as to leave a way in at least sufficient for the operator to pass through.
